# FASCICULE DE BREVET EUROPEEN

(11) **EP 0 414 616 B1**
(45) Date de publication et mention de la délivrance du brevet: **03.11.1993**
(21) Numéro de dépôt: 90402354.6
(22) Date de dépôt: 24.08.1990
(51) Int. Cl.: H02G 3/04

(54) **Joint de couvercle formant agrafe, pour moulure ou autre goulotte**
Klammerartige Abdeckungsverbindung für eine Leiste oder Rinne
Cover joint device acting as a clamp, for a moulding or a trunking

(30) Priorité: 25.08.1989 FR 8911267
(43) Date de publication de la demande: 27.02.1991
(73) Titulaire: LEGRAND, F-87045 Limoges Cédex (FR)
(72) Inventeur: Buard, Yvon, F-53600 Evron (FR)
(74) Mandataire: CABINET BONNET-THIRION

(56) Documents cités:
- FR-A- 2 132 807
- FR-A- 2 473 226
- US-A- 4 077 434

## Description

La présente invention concerne d'une manière générale les joints de couvercle à disposer localement sur les lèvres du corps d'une quelconque moulure ou autre goulotte, transversalement par rapport à ce corps, pour assurer une solution de continuité entre deux tronçons de couvercle sus-jacents, et, ainsi, s'opposer à l'insertion d'un quelconque objet, et par exemple d'une quelconque lame, entre ces deux tronçons de couvercle.

A ce jour, ces joints de couvercle sont le plus souvent simplement insérés entre le corps de la goulotte et les tronçons de couvercle, ou placés à l'extérieur de l'ensemble.

Il a cependant déjà été proposé, en association avec des moulures ou des goulottes, des pièces d'écartement et de maintien ou des sous-couvercles, qui, destinés, en pratique, à permettre la mise en oeuvre d'une ou plusieurs cloisons longitudinales de séparation dans le corps d'une telle moulure ou d'une telle goulotte, comportent, à chacune de leurs extrémités, des moyens d'engagement propres à enserrer une lèvre d'un tel corps ou d'une telle cloison, en permettant ainsi leur retenue par rapport à ce corps, transversalement par rapport à celui-ci.

Dans le brevet français déposé sous le No 72 12441 et publié sous le No 2.132.807, dans lequel il s'agit plus précisément de pièces d'écartement et de maintien intervenant localement, ces moyens d'engagement comportent, d'une part, une languette, qui est destinée à s'engager à plat sur la face supérieure d'une des lèvres du corps de la moulure ou de la goulotte à équiper, et qui porte en saillie sur sa face inférieure un bossage propre à venir s'emboîter dans une découpe correspondante de cette lèvre, et, d'autre part, deux crochets, qui, pour l'encliquetage de l'ensemble sur une telle lèvre, sont destinés à venir porter sur la face inférieure de celle-ci.

Si une telle pièce d'écartement et de maintien se trouve avantageusement bien calée longitudinalement par rapport au corps de la moulure ou de la goulotte sur lequel elle est rapportée, elle ne peut être implantée qu'en des points bien déterminés de celui-ci, et elle nécessite la présence d'évidements sur ses lèvres, ce qui est contradictoire avec une fabrication par extrusion d'un tel corps.

Dans le brevet français déposé sous le No 80 27975 et publié sous le No 2.473.226, dans lequel il s'agit de sous-couvercles, les moyens d'engagement sont de simples sièges en forme de fourchette par lesquels ces sous-couvercles sont aptes à s'insérer sur les lèvres du corps de la moulure ou de la goulotte correspondante.

De tels sièges ne sont pas susceptibles d'assurer le blocage longitudinal de ces sous-couvercles sur ce corps, ce blocage longitudinal se trouvant d'ailleurs superflu pour des sous-couvercles dont, longitudinalement, l'extension doit être comparable à celle du couvercle qui les surmonte.

La présente invention a d'une manière générale pour objet une disposition qui, pour un joint de couvercle destiné à former agrafe, c'est-à-dire destiné à assurer la retenue des fils, câbles ou autres conducteurs électriques disposés dans le corps de la goulotte, permet de s'affranchir des inconvénients succinctement exposés ci-dessus.

De manière plus précise, elle a pour objet un joint de couvercle pour moulure ou autre goulotte, du genre qui, destiné à s'étendre transversalement par rapport à une telle moulure ou goulotte, d'une des lèvres à l'autre du corps de celle-ci, sous son couvercle, comporte, à chacune de ses extrémités, des moyens d'engagement propres à enserrer une telle lèvre, ce joint de couvercle étant d'une manière générale caractérisé en ce que, lesdits moyens d'engagement sont des moyens de pincement qui comportent, en combinaison, d'une part, deux languettes, qui, écartées l'une de l'autre, sont aptes à s'engager à plat sur l'une quelconque des faces supérieures ou inférieures d'une lèvre, en un point quelconque de celle-ci, et, d'autre part, entre lesdites languettes, au moins un retour en équerre apte à venir élastiquement en appui sur l'autre desdites faces de cette lèvre.

Le joint de couvercle suivant l'invention est ainsi avantageusement apte à former une agrafe propre à être implantée localement en un point quelconque du corps de la moulure ou goulotte à équiper.

Sa mise en place sur ce corps se fait avantageusement par simple encliquetage, en sorte qu'il est susceptible d'un maintien autonome sur lui, en l'absence même des tronçons de couvercle destinés à le recouvrir.

Ainsi, avant même la pose de ces tronçons de couvercle, il est propre à assurer par lui-même une fonction spécifique de maintien en place, dans le corps concerné, des fils ou câbles placés dans ce dernier.

Certes, dans le brevet américain n° 4 077 434, il est mis en oeuvre, non pas, d'ailleurs un joint de couvercle, au sens de la présente demande, c'est-à-dire un joint destiné à s'étendre, sans être apparent, entre deux couvercles successifs, sous ceux-ci, mais un raccord à établir en surface entre de tels couvercles, dont la mise en place peut se faire en un point quelconque du corps de la moulure ou goulotte à équiper.

Mais ce raccord de couvercles intervient plus par simple encliquetage que par pincement, en sorte que, longitudinalement, sa tenue, qui n'a d'ailleurs pas besoin d'être assurée, puisqu'elle est prise en charge par les couvercles eux-mêmes, est, isolément, incertaine.

En outre, il n'y a pas, à chacune des extrémités de ce raccord de couvercles, deux languettes, avec, entre elles, un retour en équerre, mais une seule languette, avec, à son aplomb, une patte.

La réalisation s'en trouve plus compliquée, et, par moulage, elle serait sans doute difficile.

Il n'en est avantageusement pas de même avec le joint de couvercle suivant l'invention.

Les caractéristiques et avantages de l'invention ressortiront d'ailleurs de la description qui va suivre, à titre d'exemple, en référence aux dessins schématiques annexés sur lesquels :
la figure 1 est une vue en perspective du joint de couvercle suivant l'invention ;
les figures 2 et 3 en sont des vues en coupe transversale, suivant, chacune respectivement, les lignes II-II et III-III de la figure 1 ;
la figure 4 en est vue en élévation latérale, suivant la flèche IV de la figure 1 ;
la figure 5 est une vue partielle en perspective du corps d'une moulure équipé d'un joint de couvercle suivant l'invention ;
la figure 6 en est une vue en coupe transversale suivant la ligne VI-VI de la figure 5 ;
la figure 7 est une vue partielle en perspective analogue à celle de la figure 5, après mise en place d'un tronçon de couvercle correspondant ;
la figure 8 est une vue en coupe transversale de l'ensemble, suivant la ligne VIII-VIII de la figure 7.

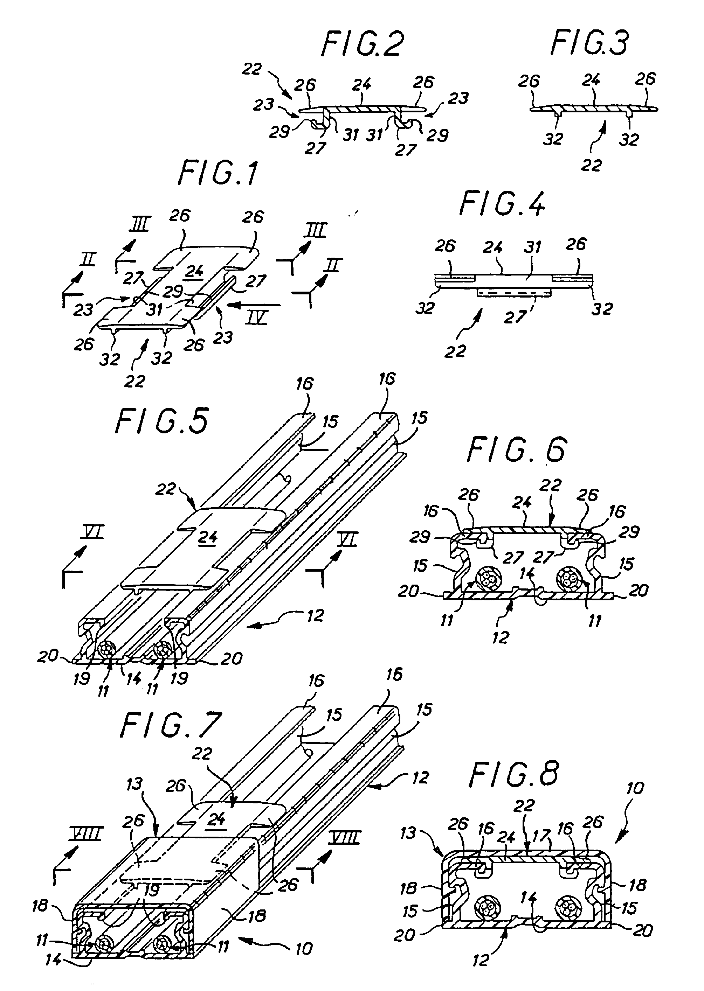

Tel qu'illustré sur ces figures, et plus particulièrement sur les figures 5 à 8, il s'agit de l'équipement d'une moulure 10 destinée au logement de conducteurs électriques 11.

De manière connue en soi, la moulure 10 est formée d'un corps 12 et d'un couvercle 13, dont on supposera, dans ce qui suit, qu'il est fractionné en tronçons.

Cette moulure 10 ne relevant pas de la présente invention, et étant bien connue par elle-même, elle ne sera pas décrite dans tous ses détails ici.

Il suffira d'indiquer que son corps 12, qui est globalement à profil transversal en U, comporte une semelle 14 et deux branches latérales 15 dont des retours en équerre forment, le long de leur bord libre, deux lèvres 16 dirigées l'une vers l'autre, et que, de manière complémentaire, son couvercle 13 comporte, suivant un profil transversal en U apte à coiffer le précédent, une paroi centrale 17 et deux parois latérales 18.

Dans la forme de réalisation représentée, les lèvres 16 du corps 12 sont chacune rigidifiées, le long de leur bord libre, par un rebord 19 dirigé vers la semelle 14, celle-ci déborde des branches latérales 15, en formant en saillie sur ces dernières des talons 20, et, les parois latérales 18 du couvercle 13 s'étendent jusqu'à ces talons 20.

A la jonction entre deux tronçons du couvercle 13, il est mis en place, sous ceux-ci, un joint de couvercle 22.

Ce joint de couvercle 22 s'étend, en pratique, transversalement, d'une des lèvres 16 à l'autre du corps 12, et il comporte, à chacune de ses extrémités, des moyens d'engagement 23 propres à enserrer une telle lèvre 16.

En pratique, ce joint de couvercle 22 forme dans sa partie centrale une plaquette 24 de contour globalement rectangulaire, dont la largeur correspond à l'écartement entre les lèvres 16 du corps 12, et sur les côtés longitudinaux de laquelle s'étendent, en saillie, les moyens d'engagement 23 correspondants.

Dans la forme de réalisation représentée, l'extension de cette plaquette 24 longitudinalement par rapport à la moulure 10 est supérieure à son extension transversalement par rapport à celle-ci.

Suivant l'invention, à chacune des extrémités du joint de couvercle 22, les moyens d'engagement 23 sont des moyens de pincement qui comportent, en combinaison, d'une part, deux languettes 26, qui, écartées l'une de l'autre, sont aptes à s'engager à plat sur l'une quelconque des faces supérieure ou inférieure d'une lèvre 16, en un point quelconque de celle-ci, et, d'autre part, entre ces languettes 26, au moins un retour en équerre 27, apte à venir élastiquement en appui sur l'autre des faces de cette lèvre 16.

Dans la forme de réalisation représentée, les deux languettes 26 s'étendent en continuité avec la plaquette centrale 24, en étant chacune respectivement disposées aux extrémités du bord longitudinal correspondant de celle-ci, et elles sont destinées à s'engager à plat sur la face supérieure des lèvres 16 du corps 12.

Conjointement, il n'y a, dans cette forme de réalisation, qu'un seul retour en équerre 27 entre deux de telles languettes 26, et ce retour en équerre 27 est destiné à venir élastiquement en appui sur la face inférieure de la lèvre 16 correspondante.

Dans la forme de réalisation représentée, le retour en équerre 27 s'arrête à distance du bord libre des languettes 26 correspondantes.

En pratique, il s'étend sensiblement à moitié de la longueur de ces languettes 26.

En outre, dans cette forme de réalisation, il comporte, en saillie le long de son bord libre, du côté des languettes 26, un rebord 29, propre à lui permettre de se crocheter sur le rebord 19 de la lèvre 15 concernée.

En pratique, le retour en équerre 27 ainsi constitué s'étend, longitudinalement, sur une longueur supérieure à celle suivant laquelle s'étend individuellement chacune des languettes 26 correspondantes, de l'une à l'autre de celles-ci.

En pratique, également, chacune de ces languettes 26 présente, longitudinalement, en saillie sur sa face inférieure, et en continuité avec la racine 31 du retour en équerre 27, une nervure 32.

La mise en place du joint de couvercle 22 suivant l'invention se fait par simple encliquetage.

Une fois en place, ce joint de couvercle 22 enserre, élastiquement, entre ses languettes 26 et ses retours en équerre 27, les lèvres 16 du corps 12.

Il est donc convenablement assujetti à ce corps 12, en étant calé sur celui-ci aussi bien transversalement que longitudinalement.

L'agrafe que constitue dès lors ainsi le joint de couvercle 22 suivant l'invention assure avantageusement la retenue des fils, câbles ou conducteurs électriques 11, avant même la mise en place, éventuellement tronçon par tronçon, du couvercle 13.

Bien entendu, la présente invention ne se limite pas à la forme de réalisation décrite et représentée, mais englobe toute variante d'exécution dans les limites des revendications.

## Revendications

1. Joint de couvercle, pour moulure ou autre goulotte, du genre qui, destiné à s'étendre transversalement par rapport à une telle moulure ou goulotte (10), d'une des lèvres (16) à l'autre du corps (12) de celle-ci, sous son couvercle (13), comporte, à chacune de ses extrémités, des moyens d'engagement (23) propres à enserrer une telle lèvre (16), caractérisé en ce que lesdits moyens d'engagement (23) sont des moyens de pincement qui comportent, en combinaison, d'une part, deux languettes (26), qui, écartées l'une de l'autre, sont aptes à s'engager à plat sur l'une quelconque des faces supérieure on inférieure d'une telle lèvre (16), en un point quelconque de celle-ci, et, d'autre part, entre lesdites languettes (26), au moins un retour en équerre (27), apte à venir élastiquement en appui sur l'autre desdites faces de cette lèvre (16).

2. Joint de couvercle suivant la revendication 1, caractérisé en ce que, les deux languettes (26) qu'il présente à chacune de ses extrémités sont destinées à s'engager à plat sur la face supérieure des lèvres (16) du corps (12), et ses retours en équerre (27) à venir élastiquement en appui sur la face inférieure de celles-ci.

3. Joint de couvercle suivant l'une quelconque des revendications 1, 2, caractérisé en ce que le retour en équerre (27) qu'il présente à chacune de ses extrémités s'arrête à distance du bord libre des languettes (26) correspondantes.

4. Joint de couvercle suivant la revendication 3, caractérisé en ce que le retour en équerre (27) qu'il présente à chacune de ses extrémités s'étend sensiblement à moitié de la longueur des languettes (26) correspondantes.

5. Joint de couvercle suivant l'une quelconque des revendications 1 à 4, caractérisé en ce que le retour en équerre (27) qu'il présente à chacune de ses extrémités comporte un rebord (29) en saillie le long de son bord libre, du côté des languettes (26) correspondantes.

6. Joint de couvercle suivant l'une quelconque des revendications 1 à 5, caractérisé en ce que, longitudinalement, le retour en équerre (27) qu'il présente à chacune de ses extrémités s'étend sur une longueur supérieure à celle suivant laquelle s'étend individuellement chacune des languettes (26) correspondantes.

7. Joint de couvercle suivant l'une quelconque des revendications 1 à 6, caractérisé en ce qu'il constitue une agrafe, dont la mise en place sur le corps (12) à équiper se fait par simple encliquetage, et qui, de maintien autonome sur ce corps (12), est propre à la retenue, dans ce dernier, des fils ou câbles qui y sont placés.

## Patentansprüche

1. Deckelverbindung für Leiste oder andere Rinne, die dazu bestimmt ist, sich in Querrichtung bezüglich einer solchen Leiste oder Rinne (10) von einer der Lippen (16) deren Körpers (12) zur anderen unter ihrem Deckel (13) zu erstrecken und an jedem ihrer Enden Eingriffsmittel (23) umfaßt, die eine solche Lippe (16) einspannen können, dadurch gekennzeichnet, daß die Eingriffsmittel (23) Klemmittel sind, die in Kombination einerseits zwei Zungen (26), die voneinander entfernt sind und auf einer beliebigen Seite einer solchen Lippe (16), der oberen oder der unteren Seite, an einem beliebigen Punkt von ihr flach aufliegen können und andererseits zwischen diesen Zungen (26) wenigstens eine Abwinklung (27) umfassen, die elastisch auf der anderen Seite der Lippe (16) zum Aufliegen kommen kann.

2. Deckelverbindung nach Anspruch 1, dadurch gekennzeichnet, daß die beiden Zungen (26), die sie an jedem ihrer Enden besitzt, dazu bestimmt sind, auf der oberen Seite der Lippen (16) des Körpers (12) flach aufzuliegen, und ihre Abwinklungen (27) auf der unteren Seite dieser Lippen elastisch zur Auflage kommen sollen.

3. Deckelverbindung nach einem der Ansprüche 1, 2, dadurch gekennzeichnet, daß die Abwinklung (27), die sie an jedem ihrer Enden besitzt, in einem Abstand vom freien Rand der entsprechenden Zungen (26) endet.

4. Deckelverbindung nach Anspruch 3, dadurch gekennzeichnet, daß die Abwinklung (27), die sie an jedem ihrer Enden besitzt, sich im wesentlichen zur Hälfte der Lange der entsprechenden Zungen (26) erstreckt.

5. Deckelverbindung nach einem der Ansprüche 1 bis 4, dadurch gekennzeichnet, daß die Abwinklung (27), die sie an jedem ihrer Enden besitzt, eine Bandleiste (29) umfaßt, die längs ihres freien Randes auf der Seite der entsprechenden Zungen (26) hervorsteht.

6. Deckelverbindung nach einem der Ansprüche 1 bis 5, dadurch gekennzeichnet, daß die Abwinklung (27), die sie an jedem ihrer Enden besitzt, sich in Längsrichtung über eine Länge erstreckt, die größer als die ist, über welche sich einzeln jede der entsprechenden Zungen (26) erstreckt.

7. Deckelverbindung nach einem der Ansprüche 1 bis 6, dadurch gekennzeichnet, daß sie eine Klammer bildet, deren Anbringung auf dem zu bestückenden Körper (12) durch einfaches Einklinken vor sich geht und die einen selbständigen Halt auf diesem Körper (12) hat und in der Lage ist, in diesem angeordnete Drähte oder Kabel in diesem zurückzuhalten.

## Claims

1. A cover joint device for a moulding or other trunking, of the kind which, being intended to extend transversely relative to such a moulding or trunking (10), from one of the lips (16) to the other of the body (12) thereof beneath its cover (13) has engagement means (23) at each of its ends which are capable of gripping one such lip (16). characterised in that said engagement means (23) are gripping means which comprise, in combination, two tongue portions (26), on the one hand, which are spread apart and capable of engaging flat on any one of the upper or lower faces of one such lip (16), at any point on the lip, and. on the other hand, comprising between said tongue portions (26) at least one right-angled return portion (27) capable of elastically bearing on the other of said faces of the lip (16).

2. A cover joint device according to Claim 1, characterised in that the two tongue portions (26) which it has at either of its ends are intended to engage flat on the upper face of the lips (16) of the body (12), and its right-angled return portions (27) are capable of elastically bearing on the lower face of the lips.

3. A cover joint device according to any one of Claims 1, 2, characterised in that the right-angled return portion (27) which it has at each of its ends stops at a spacing away from the free edge of the corresponding tongue portions (26).

4. A cover joint device according to Claim 3, characterised in that the right-angled return portion (27) which it has at each of its ends extends substantially half way along the length of the corresponding tongue portions (26).

5. A cover joint device according to any one of Claims 1 to 4, characterised in that the right-angled return portion (27) which it has at each of its ends comprises an edge (29) which projects along the free edge, on the side of the corresponding tongue portions (26).

6. A cover joint device according to any one of Claims 1 to 5, characterised in that longitudinally the right-angled return portion (27) which it has at each of its ends extends over a length which is greater than that along which each of the corresponding tongue portions (26) individually extends.

7. A cover joint device according to any one of Claims 1 to 6, characterised in that it constitutes a clamp which is placed on the body (12) to be provided with it by a simple clipping action, and which, being held independently to this body (12), is capable of holding in this latter wires or cables placed there.
